# EUROPEAN PATENT APPLICATION

(11) **EP 4 563 270 A1**
(43) Date of publication of application: **04.06.2025**
(21) Application number: 23212512.0
(22) Date of filing: 28.11.2023
(51) Int. Cl.: B23B 51/00, B23B 51/02

(54) **ROTARY CUTTING TOOL WITH REPLACEABLE CUTTING HEAD**

(71) Applicant: AB Sandvik Coromant, 811 81 Sandviken (SE)
(72) Inventor: ENGSTRÖM, Tord, 811 81 Sandviken (SE); SVENSSON, André, 81181 Sandviken (SE)
(74) Representative: Sandvik

(57) **Abstract**

A rotary cutting tool comprising a tool body (2) and a cutting head (30) with a coupling portion (31) receivable between two axially projecting coupling legs (12) on the tool body. Internal clamping surfaces (14) on the coupling legs are designed for press fit engagement with cylindrical external clamping surfaces (34) on the cutting head. Each internal clamping surface is conical and inclined at a small angle outwards away from the centre axis of the tool body as seen in a direction from an upper edge to a lower edge of the internal clamping surface, or divided into a cylindrical first sub surface (14a) and a conical second sub surface (14b) that is located axially rearward of the first sub surface and inclined at a small angle outwards away from the centre axis of the tool body as seen in a direction from an upper edge towards a lower edge of the conical second sub surface.

## Description

### FIELD OF THE INVENTION AND PRIOR ART

The present invention relates to a rotary cutting tool according to the preamble of claim 1.

Rotary cutting tools, such as drilling tools, may be composed of two separate parts, including an elongated tool body and a cutting head that is detachably attachable to the tool body at the front end thereof and thereby constitutes a replaceable tip of the cutting tool, wherein the cutting edges of the cutting tool are provided on the replaceable cutting head. Hereby, the major part of the cutting tool constituted by the tool body can be made of a comparatively inexpensive material, such as steel, whereas the smaller cutting head can be made of a harder and more expensive material, such as cemented carbide. Thus, the tool body is normally made of a softer and more deformable material than the cutting head. In a cutting tool of this type, the replaceable cutting head constitutes a wear part that makes contact with the workpieces and is subjected to wear during machining thereof and that can be discarded and replaced with a new cutting head when it has been worn out, whereas the tool body is intended to be re-used with new cutting heads multiple times.

In a rotary cutting tool with replaceable cutting head, the tool body may be provided with two axially projecting coupling legs at its front end, wherein the cutting head has a coupling portion that is configured to be received in a space between the coupling legs and rotatable in this space between a disengagement position, in which external clamping surfaces on the coupling portion of the cutting head are disengaged from corresponding internal clamping surfaces on the coupling legs and torque transfer surfaces on the cutting head are separated from corresponding torque transfer surfaces on the coupling legs, and an engagement position, in which the external clamping surfaces on the coupling portion of the cutting head are in press fit engagement with the internal clamping surfaces on the coupling legs and the torque transfer surfaces on the cutting head abut against the corresponding torque transfer surfaces on the coupling legs. Hereby, the cutting head may be attached to and released from the tool body in a simple and quick manner by being rotated in relation to the tool body about the centre axis of the cutting head. During the rotation of the cutting head from the disengagement position to the engagement position, the coupling legs are subjected to a slight elastic deflection radially outwards, i.e. a slight elastic bending in relation to the centre axis of the tool body, which in its turn implies that the coupling legs will exert a resilient clamping force on the coupling portion of the cutting head when the coupling portion of the cutting head is in the engagement position and thereby keep the cutting head attached to the tool body. During each rotation of a cutting head from the disengagement position to the engagement position, i.e. each time a worn out cutting head is replaced with a new cutting head, the internal clamping surfaces on the coupling legs are subjected to deformation, by wear and embossing, by the corresponding external clamping surfaces on the cutting head, which is of harder and more wear-resistant material than the tool body. The internal clamping surfaces on the coupling legs may also be subjected to some wear and embossing at the interface with the corresponding external clamping surfaces on the cutting head during the machining of workpieces. When the deformation of the internal clamping surfaces on the coupling legs has reached a certain level after a number of cutting head replacements, the coupling legs will no longer be able to exert the desired clamping force on the coupling portion of the cutting head, which implies that the tool body has to be discarded.

In a rotary cutting tool of the above-mentioned type, the mutual clamping surfaces on the coupling legs of the tool body and the coupling portion of the cutting head may be conical and widen in the direction towards the rear end of the tool body and the cutting head, respectively, as illustrated in US 5 988 953 A. However, a disadvantage with such conical clamping surfaces is that the tolerance requirements are high for these surfaces and that they are relatively complicated to achieve by means of mechanical machining. As an alternative, the mutual clamping surfaces on the coupling legs of the tool body and the coupling portion of the cutting head may be cylindrical, as illustrated in US 8 430 609 B2, wherein the cylindrical internal clamping surface on each coupling leg extends in parallel with the centre axis of the tool body and each one of the cylindrical external clamping surfaces on the coupling portion of the cutting head extends in parallel with the centre axis of the cutting head.

### OBJECT OF THE INVENTION

The object of the present invention is to provide a rotary cutting tool of the above-mentioned type that has a new and favourable design.

### SUMMARY OF THE INVENTION

According to the invention, said object is achieved by means of a rotary cutting tool having the features defined in claim 1.

The rotary cutting tool according to the invention comprises an elongated tool body and a replaceable cutting head detachably attachable to the tool body, wherein:
- the tool body has a rear end configured for attachment to a machine and an opposite front end, wherein a longitudinal centre axis of the tool body extends between the rear end and the front end of the tool body;
- the tool body at its front end has a coupling portion with two coupling legs projecting in the axial direction of the tool body and arranged opposite to each other on opposite sides of the centre axis of the tool body;
- the cutting head has a coupling portion, which is designed for engagement with the coupling portion of the tool body and which is receivable in a space between said coupling legs, wherein two convex and cylindrical external clamping surfaces are provided on the coupling portion of the cutting head opposite to each other on opposite sides of a centre axis of the cutting head, the two external clamping surfaces extending in parallel with the centre axis of the cutting head, wherein the external clamping surfaces on the cutting head are configured to be in press fit engagement with an internal clamping surface on an inner side of a respective one of the coupling legs when the cutting head is attached to the tool body;

- each coupling leg is provided with a torque transfer surface for transferring torque from the tool body to the cutting head, which torque transfer surface is configured to abut against a corresponding torque transfer surface on the cutting head when the cutting head is attached to the tool body; and
- the coupling portion of the cutting head is rotatable in said space between the coupling legs about the centre axis of the cutting head between a disengagement position, in which the external clamping surfaces on the coupling portion of the cutting head are disengaged from the internal clamping surfaces on the coupling legs and the torque transfer surfaces on the cutting head are separated from the corresponding torque transfer surfaces on the coupling legs, and an engagement position, in which the external clamping surfaces on the coupling portion of the cutting head are in press fit engagement with the internal clamping surfaces on the coupling legs and the torque transfer surfaces on the cutting head abut against the corresponding torque transfer surfaces on the coupling legs.

According to a first alternative, each one of said internal clamping surfaces on the coupling legs comprises:
- a cylindrical first sub surface extending in parallel with the centre axis of the tool body, and
- a conical second sub surface that is located axially rearward of said first sub surface as seen in a reference direction from the rear end of the tool body towards the front end thereof in parallel with the centre axis of the tool body and that adjoins to said first sub surface along an upper edge of the second sub surface located essentially in a plane perpendicular to the centre axis of the tool body, wherein the second sub surface is inclined outwards away from the centre axis of the tool body as seen in a direction along the second sub surface from said upper edge thereof towards an opposite lower edge thereof and has such an inclination that the second sub surface forms an angle of 0.3-5°, preferably 0.3-2.5° and more preferably 0.5-1.0°, with the centre axis of the tool body as seen in any plane that extends across the second sub surface and contains the centre axis of the tool body.

The above-mentioned angle formed by the conical second sub surface with the centre axis of the tool body refers to the angle of inclination of the conical second sub surface in relation to the centre axis of the tool body when the coupling legs are in an unloaded and strainless state, i.e. when they are not elastically deflected by the coupling portion of the cutting head. Due to the elastic deflection of the coupling legs radially outwards by the coupling portion of the cutting head in the engagement position, the angle formed by the conical second sub surface with the centre axis of the tool body is slightly decreased when the coupling portion of the cutting head is in the engagement position as compared to said unloaded state of the coupling legs.

In the corresponding manner, the above-mentioned parallelism between the cylindrical first sub surface and the centre axis of the tool body refers to the position of the cylindrical first sub surface in relation to the centre axis of the tool body when the coupling legs are in an unloaded and strainless state, i.e. when they are not elastically deflected by the coupling portion of the cutting head. Due to the elastic deflection of the coupling legs radially outwards by the coupling portion of the cutting head in the engagement position, the cylindrical first sub surface is slightly inclined in relation to the centre axis of the tool body when the coupling portion of the cutting head is in the engagement position.

The coupling legs have a small flexibility in relation to the adjacent part of the tool body and are elastically bendable radially outwards away from the centre axis of the tool body under the effect of the coupling portion of the cutting head upon rotation of this coupling portion from the disengagement position to the engagement position. When the tool body is in a brand new condition, i.e. when it has not previously been connected to any cutting head and has still not been used for machining of any workpiece, and a cutting head for the first time is attached to the tool body, each one of the external clamping surfaces on the coupling portion of the cutting head will initially, when the coupling portion of the cutting head is rotated from the disengagement position to the engagement position and due to the ensuing small deflection of the coupling legs radially outwards, make contact with the associated internal clamping surface on one of the coupling legs along the intersection between the cylindrical first sub surface and the conical second sub surface, i.e. along the upper edge of the conical second sub surface. It is hereby ensured that the initial contact area between each external clamping surface and the associated internal clamping surface will be located at a predefined position on the internal clamping surface, which makes it possible to ensure that the cutting head will exert a pressing force on each coupling leg at a suitably high position on the coupling leg such that the elastic deflection of the coupling leg is facilitated. The moment arm of said pressing force, and thereby the bending moment on the coupling leg, will increase with increased distance between said contact area on the coupling leg and the base of the coupling leg. By moving said contact area upwards on the coupling legs, and thereby increasing the length of said moment arm, it will be possible to allow a larger elastic deflection of the coupling legs under the effect of the coupling portion of the cutting head while still enabling a convenient rotation of the cutting head from the disengagement position to the engagement position with a moderate force. An increased elastic deflection of the coupling legs will in its turn imply that the internal clamping surfaces on the coupling legs can be subjected to more wear and embossing before losing their ability to exert the desired clamping force on the coupling portion of the cutting head, and the useful life of the tool body is thereby increased. An increased elastic deflection of the coupling legs also implies reduced tolerance requirements with respect to the internal and external clamping surfaces.

When the tool body is in a brand new condition and a cutting head for the first time is attached to the tool body by rotation of the coupling portion of the cutting head from the disengagement position to the engagement position, minor deformations will arise on each one of the internal clamping surfaces at the interface with the associated external clamping surface by embossing, i.e. plastic deformation. The contact area between each internal clamping surface and the associated external clamping surface along the intersection between the cylindrical first sub surface and the conical second sub surface will be slightly increased by this embossing, which will contribute to a stable support for the coupling portion of the cutting head in the space between the coupling legs. During the machining of workpieces and in connection with each replacement of the cutting head with a new cutting head, each internal clamping surface will be subjected to further wear and embossing at the interface with the associated external clamping surface, which will cause a gradual and slow increase of said contact area. Furthermore, the angle of inclination of the conical second sub surface of each one of the internal clamping surfaces is such that there is a very small clearance between the associated external clamping surface and the part of the conical second sub surface located below said contact area when the coupling portion of the cutting head is in the engagement position, which implies that this part of the conical second sub surface may assist in supporting the coupling portion of the cutting head when the cutting head is subjected to excessive external forces.

According to a second alternative, each one of said internal clamping surfaces on the coupling legs has an upper edge that faces away from the rear end of the tool body and that is located essentially in a plane perpendicular to the centre axis of the tool body, wherein each one of said internal clamping surfaces on the coupling legs is conical and inclined outwards away from the centre axis of the tool body as seen in a direction along the internal clamping surface from the upper edge thereof towards an opposite lower edge thereof facing the rear end of the tool body and has such an inclination that the internal clamping surface forms an angle of 0.3-5°, preferably 0.3-2.5° and more preferably 0.5-1.0°, with the centre axis of the tool body as seen in any plane that extends across the internal clamping surface and contains the centre axis of the tool body.

The above-mentioned angle formed by the conical internal clamping surface with the centre axis of the tool body refers to the angle of inclination of the conical internal clamping surface in relation to the centre axis of the tool body when the coupling legs are in an unloaded and strainless state, i.e. when they are not elastically deflected by the coupling portion of the cutting head. Due to the elastic deflection of the coupling legs radially outwards by the coupling portion of the cutting head in the engagement position, the angle formed by the conical internal clamping surface with the centre axis of the tool body is slightly decreased when the coupling portion of the cutting head is in the engagement position as compared to said unloaded state of the coupling legs.

When the tool body is in a brand new condition, i.e. when it has not previously been connected to any cutting head and has still not been used for machining of any workpiece, and a cutting head for the first time is attached to the tool body, each one of the external clamping surfaces on the coupling portion of the cutting head will in this case initially, when the coupling portion of the cutting head is rotated from the disengagement position to the engagement position and due to the ensuing small deflection of the coupling legs radially outwards, make contact with the associated conical internal clamping surface along the upper edge thereof. It is hereby ensured that the initial contact area between each external clamping surface and the associated conical internal clamping surface will be located at a predefined position on the conical internal clamping surface, which makes it possible to ensure that the cutting head will exert a pressing force on each coupling leg at a suitably high position on the coupling leg such that the elastic deflection of the coupling leg is facilitated.

When the tool body is in a brand new condition and a cutting head for the first time is attached to the tool body by rotation of the coupling portion of the cutting head from the disengagement position to the engagement position, minor deformations will arise on each one of the conical internal clamping surfaces at the interface with the associated external clamping surface by embossing, i.e. plastic deformation. The contact area between each conical internal clamping surface and the associated external clamping surface along the upper edge of the conical internal clamping surface will be slightly increased by this embossing, which will contribute to a stable support for the coupling portion of the cutting head in the space between the coupling legs. During the machining of workpieces and in connection with each replacement of the cutting head with a new cutting head, each conical internal clamping surface will be subjected to further wear and embossing at the interface with the associated external clamping surface, which will cause a gradual and slow increase of said contact area. Furthermore, the angle of inclination of each one of the conical internal clamping surfaces is such that there is a very small clearance between the associated external clamping surface and the part of the conical internal clamping surface located below said contact area when the coupling portion of the cutting head is in the engagement position, which implies that this part of the conical internal clamping surface may assist in supporting the coupling portion of the cutting head when the cutting head is subjected to excessive external forces.

Each one of said external clamping surfaces is convex as seen in cross-sectional planes through the coupling portion of the cutting head perpendicularly to the centre axis of the cutting head, which implies that the external clamping surfaces are convex as seen in every cross-sectional plane through the coupling portion of the cutting head that is perpendicularly to the centre axis of the cutting head and intersects the external clamping surfaces. Each one of said internal clamping surfaces is concave as seen in cross-sectional planes through the coupling legs perpendicularly to the centre axis of the tool body, which implies that the internal clamping surfaces are concave as seen in every cross-sectional plane through the coupling legs that is perpendicularly to the centre axis of the cutting head and intersects the internal clamping surfaces.

According to an embodiment of the invention, said cylindrical first sub surfaces are concentric with the centre axis of the tool body and said external clamping surfaces are concentric with the centre axis of the cutting head, wherein each one of the external clamping surfaces has a radius of curvature that is larger, preferably 1-4% larger, than the radius of curvature of each one of the cylindrical first sub surfaces.

According to another embodiment of the invention, each one of said cylindrical first sub surfaces has a length in the axial direction of the tool body that corresponds to 5-50%, preferably 10-30%, of the total length of the internal clamping surface in the axial direction of the tool body.

According to another embodiment of the invention, said conical internal clamping surfaces are concentric with the centre axis of the tool body and said external clamping surfaces are concentric with the centre axis of the cutting head, wherein each one of the external clamping surfaces has a radius of curvature that is larger, preferably 1-4% larger, than the radius of curvature at the upper edge of each one of said conical internal clamping surfaces.

According to another embodiment of the invention, two chip flutes are formed in the tool body on the outside thereof and extend, preferably helically, alongside of each other along a part of the tool body, wherein each one of these chip flutes is configured to connect to a corresponding chip flute on the outside of the cutting head when the coupling portion of the cutting head is in said engagement position in said space between the coupling legs.

Another embodiment of the invention is characterized in:
- that said space between the coupling legs has a bottom surface that is formed in the tool body and that extends between the coupling legs; and
- that an undercut groove is formed in each coupling leg on the inner side thereof between the internal clamping surface on the coupling leg and said bottom surface and extends between the two chip flutes.
The thickness of material at the base of each coupling leg is reduced by the undercut groove in the coupling leg, which in its turn implies that the flexibility of the coupling leg is increased by the undercut groove. Thus, the undercut grooves make it easier to deflect the coupling legs radially outwards upon rotation of the coupling portion of the cutting head into the engagement position, which contributes to making it possible to allow a comparatively large elastic deflection of the coupling legs under the effect of the coupling portion of the cutting head while still enabling a convenient rotation of the cutting head from the disengagement position to the engagement position with a moderate force.

Each one of said undercut grooves preferably adjoins to said bottom surface through a lower part of the undercut groove that is concavely curved as seen in any plane that extends across the undercut groove and contains the centre axis of the tool body. The curvature of this lower part of each undercut groove forms a smooth and curved transition between the associated coupling leg and the bottom surface formed in the tool body between the two coupling legs, which contributes to a reduced stress concentration at the base of each coupling leg. The undercut grooves in the coupling legs create additional free space in radial direction between the coupling legs at the base thereof that makes it possible to increase the radius of curvature, and thereby reduce the stress concentration, at the transition between each coupling leg and the bottom surface between the coupling legs.

Each one of said undercut grooves preferably adjoins to the internal clamping surface on the associated coupling leg through an upper part of the undercut groove that is concavely curved as seen in any plane that extends across the undercut groove and contains the centre axis of the tool body. The curvature of this upper part of each undercut groove forms a smooth and curved transition between the undercut groove and the adjacent internal clamping surface.

According to another embodiment of the invention, each one of the coupling legs is provided with an axial locking member that is configured to fit with a corresponding axial locking member on the coupling portion of the cutting head when the coupling portion of the cutting head is in said engagement position in said space between the coupling legs to thereby form an axial lock between the cutting head and the tool body and prevent the coupling portion of the cutting head from moving out of the space between the coupling legs in the axial direction of the tool body when being in said engagement position in this space. By means of the axial locking members, a positive locking in axial direction between the tool body and the cutting head is achieved. This positive locking prevents the cutting head from being displaced in axial direction away from the tool body, for instance when the cutting tool is pulled out of a bore drilled by means of the cutting tool. The axial locking member of each coupling leg preferably has the form of an elongated recess formed in the coupling leg on the inner side thereof, wherein the corresponding axial locking member of the cutting head has the form of an external projection on the coupling portion of the cutting head. The axial locking member of each coupling leg is preferably located at a position on the coupling leg between the internal clamping surface on the coupling leg and an upper end face of the coupling leg.

According to another embodiment of the invention, each one of the coupling legs is provided with an axial support surface that is facing axially forward and configured to abut against a corresponding axial abutment surface on the cutting head when the cutting head it attached to the tool body. The axial support surfaces on the coupling legs are configured to support the cutting head in axial direction and carry axial forces when the cutting head is pressed against a workpiece.

Said axial support surface on each coupling leg is preferably located at a higher axial position on the coupling leg than the internal clamping surface on the coupling leg. Furthermore, the torque transfer surface on each coupling leg is preferably located at a position on the coupling leg between the axial support surface on the coupling leg and an upper end face of the coupling leg.

According to another embodiment of the invention, the internal clamping surface on each one of the coupling legs adjoins to a guiding surface that is provided on the associated coupling leg in front of the internal clamping surface as seen in an intended direction of rotation of the rotary cutting tool and that is configured to guide the corresponding external clamping surface on the coupling portion of the cutting head into engagement with the internal clamping surface when the coupling portion of the cutting head is rotated in said space between the coupling legs about the centre axis of the cutting head from said disengagement position to said engagement position. This guiding surface on each coupling leg will facilitate the rotation of the cutting head into the engagement position.

Further advantageous features of the rotary cutting tool according to the present invention will appear from the description following below.

### BRIEF DESCRIPTION OF THE DRAWINGS

With reference to the appended drawings, a specific description of embodiments of the invention cited as examples follows below. In the drawings:
- Fig 1: is a perspective view of a rotary cutting tool according to a first embodiment of the present invention,
- Fig 2: is a front end view of the rotary cutting tool of Fig 1,
- Fig 3: is a perspective view of a front part of the rotary cutting tool of Fig 1, with a cutting head and a tool body included in the rotary cutting tool shown separated from each other,
- Fig 4: is a cut through a front part of the rotary cutting tool according to the line IV-IV in Fig 2,
- Fig 5: is a cut through a front part of the tool body corresponding to Fig 4, but with the cutting head removed,
- Fig 6: is a detail enlargement according to the circle VI in Fig 4,
- Fig 7: is a front end view of the tool body included in the rotary cutting tool of Fig 1,
- Fig 8: is a cut through a front part of the tool body according to the line VIII-VIII in Fig 7,
- Figs 9a and 9b: are perspective views from different directions of the cutting head included in the rotary cutting tool of Fig 1,
- Fig 9c: is a lateral view of the cutting head of Figs 9a and 9b,
- Fig 9d: is plan view from above of the cutting head of Figs 9a and 9b,
- Fig 9e: is plan view from below of the cutting head of Figs 9a and 9b,
- Fig 10a: is a lateral view of a front part of the rotary cutting tool of Fig 1, with a coupling portion of the cutting head shown in the disengagement position,
- Fig 10b: is a cut according to the line Xb-Xb in Fig 10a,
- Fig 11a: is a lateral view corresponding to Fig 10a, with the coupling portion of the cutting head shown in the engagement position,
- Fig 11b: is a cut according to the line Xlb-Xlb in Fig 11a,
- Fig 12: is a perspective view of a rotary cutting tool according to a second embodiment of the invention,
- Fig 13: is a front end view of the rotary cutting tool of Fig 12,
- Fig 14: is a perspective view of a front part of the rotary cutting tool of Fig 12, with a cutting head and a tool body included in the rotary cutting tool shown separated from each other,
- Fig 15: is a cut through a front part of the rotary cutting tool according to the line XV-XV in Fig 13,
- Fig 16: is a cut through a front part of the tool body corresponding to Fig 15, but with the cutting head removed,
- Fig 17: is a detail enlargement according to the circle XVII in Fig 15,
- Fig 18: is a front end view of the tool body included in the rotary cutting tool of Fig 12,
- Fig 19: is a cut through a front part of the tool body according to the line XIX-XIX in Fig 18,
- Figs 20a and 20b: are perspective views from different directions of the cutting head included in the rotary cutting tool of Fig 12,
- Fig 20c: is a lateral view of the cutting head of Figs 20a and 20b, and
- Fig 20d: is plan view from below of the cutting head of Figs 20a and 20b.

### DETAILED DESCRIPTION OF EMBODIMENTS OF THE INVENTION

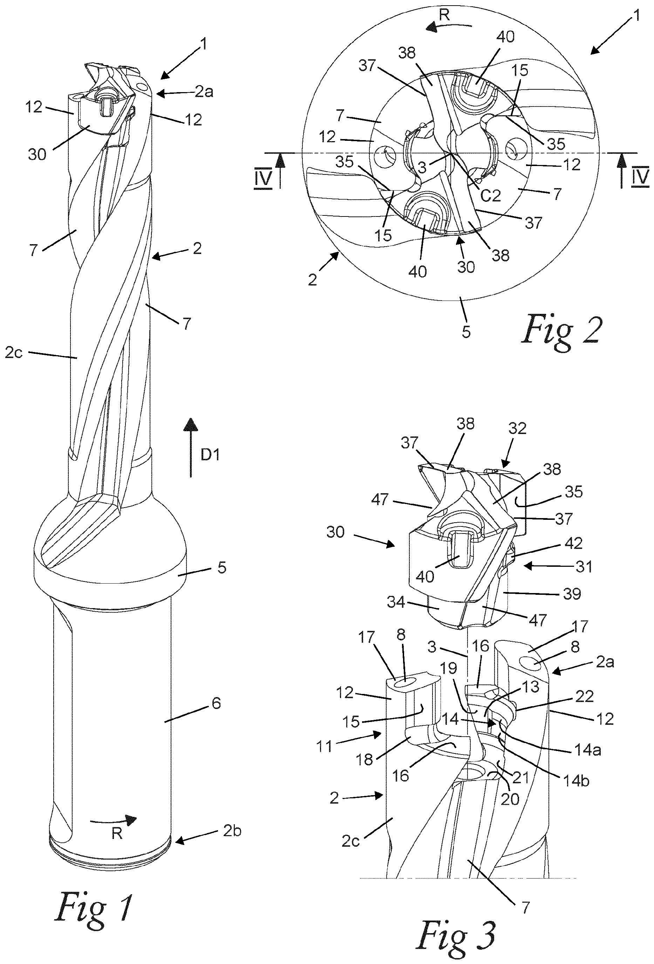

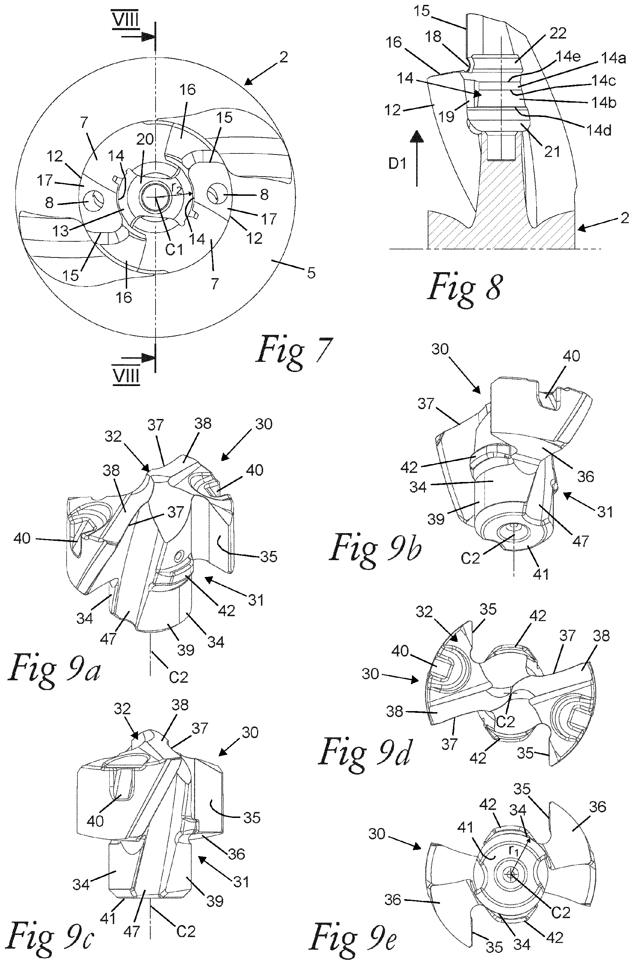

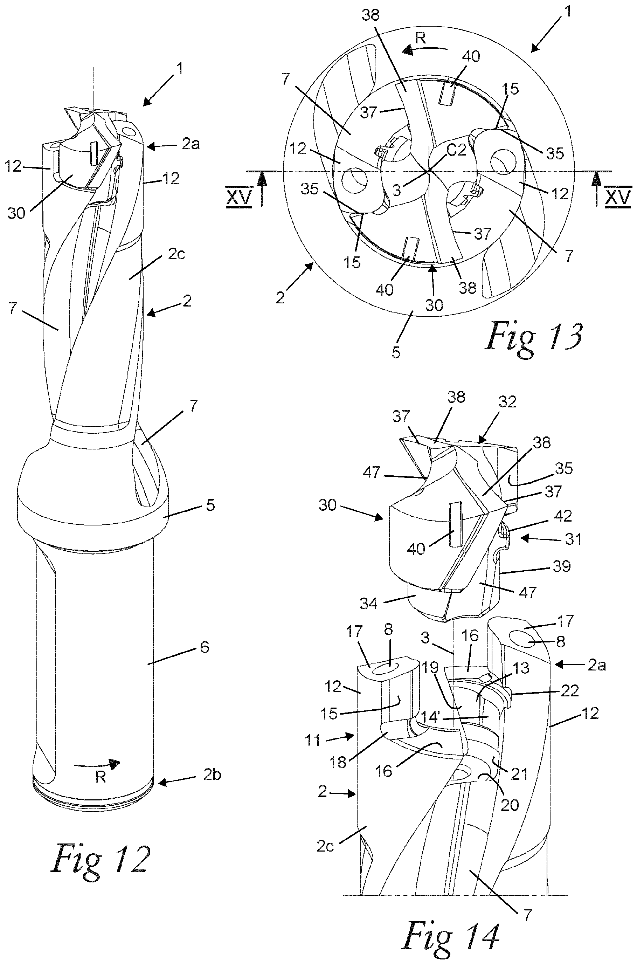

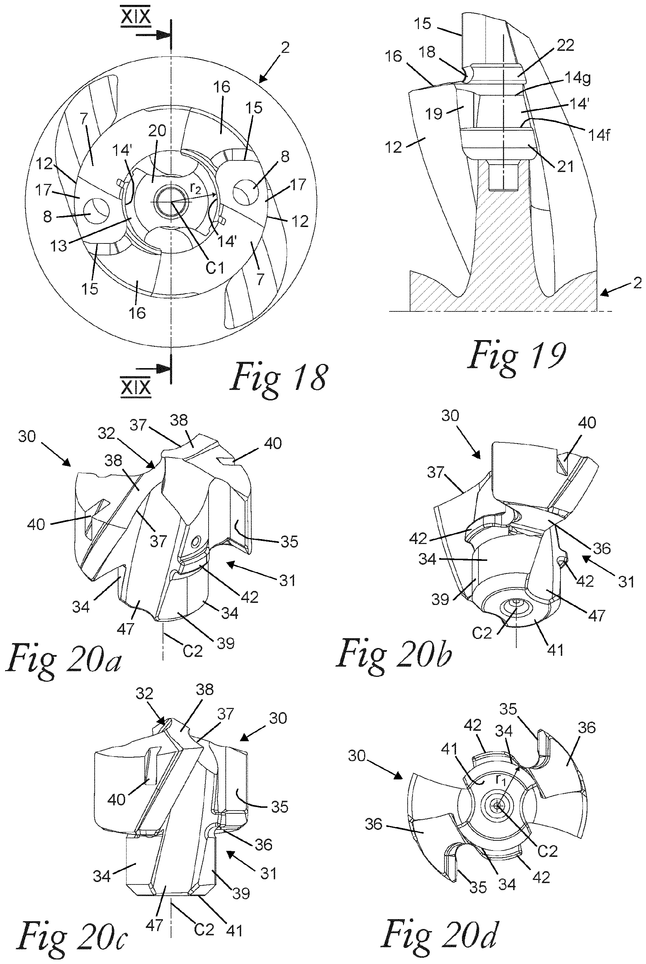

The rotary cutting tool 1 according to the present invention is intended to be rotated for machining of a workpiece by cutting. Two different embodiments of a cutting tool 1, 1' according to the present invention are illustrated in Figs 1-11 and in Figs 12-20, respectively. In the illustrated examples, the rotary cutting tools 1, 1' are designed as twist drills, but the cutting tool of the invention could also be designed as another type of tool for rotary cutting machining.

The cutting tool 1, 1' comprises an elongated tool body 2 and a replaceable cutting head 30 detachably attachable to the tool body 2 at a front end thereof. In Figs 1 and 12, the cutting tool 1, 1' is shown with the cutting head 30 mounted to the tool body 2 and with the cutting tool 1, 1' ready for machining of a workpiece. The cutting tool 1, 1' is configured to be rotated about an axis of rotation 3. The intended direction of rotation of the cutting tool 1, 1' for machining is marked with the arrow R in Figs 1, 2, 11b, 12 and 13. The direction of rotation R constitutes the direction in which the cutting tool 1, 1' is intended to be rotated about the axis of rotation 3 in order to achieve cutting machining of a workpiece.

The cutting head 30 is made of hard and wear-resistant material, preferably cemented carbide, and the tool body 2 is preferably made of steel or other suitable metallic material.

The tool body 2 has a front end 2a and an opposite rear end 2b. A longitudinal centre axis C1 of the tool body 2 extends between the rear end 2b and the front end 2a of the tool body, wherein this centre axis C1 coincides with the axis of rotation 3 of the cutting tool 1, 1'. In the illustrated embodiments, a collar 5 is provided on the tool body 2. A rear part 6 of the tool body 2 located between the collar 5 and the rear end 2b forms a connection member, through which the tool body 2 is mountable, directly or via an intermediate tool holder, to a rotating spindle or the similar of a drilling machine or other type of machine tool. The tool body 2 has a peripheral surface 2c. In the illustrated embodiments, the tool body 2 has 180° rotational symmetry about the centre axis C1 of the tool body and the cutting head 30 has 180° rotational symmetry about a centre axis C2 of the cutting head. The centre axis C2 of the cutting head 30 coincides with the axis of rotation 3 of the cutting tool 1, 1' when the cutting head 30 is attached to the tool body 2.

At its front end 2a, the tool body 2 has a coupling portion 11 designed for engagement with a corresponding coupling portion 31 of the cutting head 30. The coupling portion 11 of the tool body 2 comprises two elastically bendable coupling legs 12, which project in the axial direction of the tool body 2 and are arranged opposite to each other on opposite sides of the centre axis C1 of the tool body. Between the coupling legs 12, there is a space 13 designed for receiving the coupling portion 31 of the cutting head 30. Two internal clamping surfaces 14, 14' are provided in said space 13 opposite to each other on opposite sides of the centre axis C1 of the tool body 2, wherein these internal clamping surfaces 14, 14' are formed on an inner side of a respective one of the coupling legs 12. The inner side of a coupling leg 12 here refers to the side of the coupling leg that faces towards the centre axis C1 of the tool body 2. Each internal clamping surface 14, 14' is concave as seen in every cross-sectional plane through the coupling legs 12 that is perpendicular to the centre axis C1 of the tool body 2 and intersects the internal clamping surfaces 14, 14'.

The cutting head 30 has a coupling portion 31, which is designed for engagement with the coupling portion 11 of the tool body 2 and which is receivable in the above-mentioned space 13 between the coupling legs 12. Two cylindrical external clamping surfaces 34 are provided on the coupling portion 31 of the cutting head 30 opposite to each other on opposite sides of the centre axis C2 of the cutting head 30. The two external clamping surfaces 34 extend in parallel with the centre axis C2 of the cutting head 30. Each external clamping surface 34 is convex as seen in every cross-sectional plane through the cutting head 30 that is perpendicular to the centre axis C2 of the cutting head and intersects the external clamping surfaces 34.

The external clamping surfaces 34 on the cutting head 30 are configured to be in press fit engagement with a respective one of the internal clamping surface 14, 14' on the coupling legs 12 when the cutting head 30 is attached to the tool body 2. Thus, the shape of each external clamping surface 34 is so adapted to the shape of the associated internal clamping surface 14, 14' that it will mate with the associated internal clamping surface 14, 14' and make contact with it with press fit, also known as interference fit of friction fit, when the coupling portion 31 of the cutting head 30 is brought into engagement with the coupling portion 11 of the tool body 2.

Each coupling leg 12 is provided with a torque transfer surface 15 for transferring torque from the tool body 1 to the cutting head 30, which torque transfer surface 15 is designed for abutment against a corresponding torque transfer surface 35 on the cutting head 30 in order to transfer torque from the tool body 2 to the cutting head 30 during rotation of the cutting tool 1, 1' in the intended direction of rotation R. In the illustrated embodiments, each torque transfer surface 15 is planar and extends in parallel with the centre axis C1 of the tool body 2.

One or more forwardly facing axial support surfaces 16 are also provided at the front part of the tool body 2 on the coupling legs 12 or between the coupling legs 12, wherein each such axial support surface 16 is designed for abutment against a corresponding axial abutment surface 36 on the cutting head 30 in order to support the cutting head 30 in axial direction and carry axial forces when the cutting head 30 is pressed against a workpiece. In the illustrated embodiments, each one of the coupling legs 12 is provided with such an axial support surface 16 that is configured to abut against a corresponding axial abutment surface 36 on the cutting head 30 when the cutting head it attached to the tool body 2. In the illustrated embodiments, the axial support surface 16 of each coupling leg 12 is slightly inclined in relation to a cross-sectional plane through the coupling legs 12 that is perpendicular to the centre axis C1 of the tool body 2. However, the axial support surface 16 of each coupling leg 12 may as an alternative extend perpendicularly to the centre axis C1 of the tool body 2.

In the illustrated embodiments, the axial support surface 16 of each coupling leg 12 is located at a higher axial position on the coupling leg 12 than the internal clamping surface 14, 14' of the coupling leg and at a lower axial position on the coupling leg 12 than the torque transfer surface 15 of the coupling leg. Thus, in this case, the torque transfer surface 15 of each coupling leg 12 is located at a position on the coupling leg between the axial support surface 16 of the coupling leg and an upper end face 17 of the coupling leg. Furthermore, in the illustrated embodiments, the axial support surface 16 of each coupling leg 12 borders on the torque transfer surface 15 of the coupling leg, wherein an undercut groove 18 is formed in the coupling leg 12 between the axial support surface 16 and the torque transfer surface 15.

At its front end, the detachable and replaceable cutting head 30 has a cutting portion 32, which is provided with at least one cutting edge 37 that extends in a substantially radial direction of the cutting head 30. In the illustrated embodiments, the cutting head 30 is provided with two such cutting edges 37. A clearance surface 38 is arranged on the cutting portion 32 behind each cutting edge 37, as seen in the intended direction of rotation R of the cutting tool 1, 1'. The above-mentioned coupling portion 31 of the cutting head 30, which is designed for press fit engagement with the coupling portion 11 of the tool body 2 and receivable in the space 13 between the coupling legs 12, is located below the cutting portion 32. The above-mentioned external clamping surfaces 34 are provided on the coupling portion 31 of the cutting head 30 on either side of the centre axis C2 of the cutting head 30. Furthermore, the coupling portion 31 of the cutting head 30 is provided with two torque transfer surfaces 35 arranged on opposite sides of the centre axis C2 of the cutting head, each of which being designed for abutment against the torque transfer surface 15 on one of the coupling legs 12 of the tool body 2. The coupling portion 31 of the cutting head 30 is also provided with two axial abutment surfaces 36 arranged on opposite sides of the centre axis C2 of the cutting head, each of which being designed for abutment against the axial support surface 16 on one of the coupling legs 12 of the tool body 2.

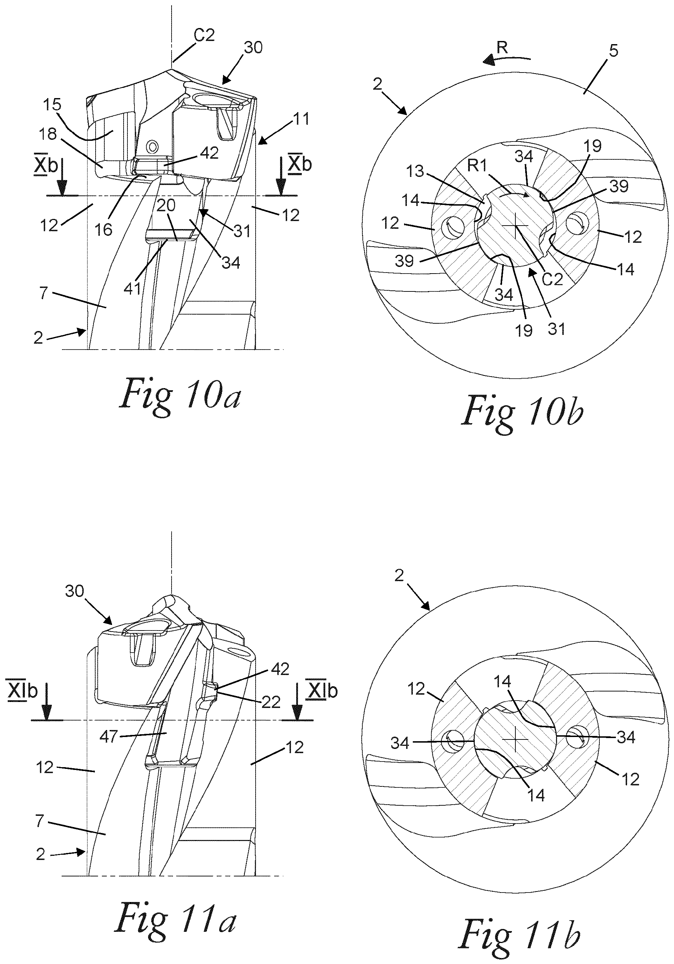

When received in the space 13 between the coupling legs 12 of the tool body 2, the coupling portion 31 of the cutting head 30 is rotatable in this space 13 about the centre axis C2 of the cutting head 30 between:
- a disengagement position (see Figs 10a and 10b), in which the external clamping surfaces 34 on the coupling portion 31 of the cutting head 30 are disengaged from the internal clamping surfaces 14, 14' on the coupling legs 12 and the torque transfer surfaces 35 on the cutting head 30 are separated from the corresponding torque transfer surfaces 15 on the coupling legs 12, and
- an engagement position (see Figs 11a and 11b), in which the external clamping surfaces 34 on the coupling portion 31 of the cutting head 30 are in press fit engagement with the internal clamping surfaces 14, 14' on the coupling legs 12 and the torque transfer surfaces 35 on the cutting head 30 abut against the corresponding torque transfer surfaces 15 on the coupling legs 12.

The rotation of the coupling portion 31 of the cutting head 30 from said disengagement position to said engagement position is effected by a rotation of the cutting head 30 about its centre axis C2 and in relation to the tool body 2 in a direction of rotation R1 (see Fig 10b) opposite to the intended direction of rotation R of the cutting tool 1, 1'. The rotation of the coupling portion 31 of the cutting head 30 from the engagement position to the disengagement position is effected by a rotation of the cutting head 30 about its centre axis C2 and in relation to the tool body 2 in the opposite direction.

When the coupling portion 31 of the cutting head 30 is in said disengagement position in the space 13 between the coupling legs 12, the cutting head 30 can be moved in axial direction out of the space 13 between the coupling legs 12 and away from the tool body 2. When the coupling portion 31 of the cutting head 30 is in said engagement position in the space 13 between the coupling legs 12, the cutting head 30 is locked to the tool body 2 and the cutting tool 1, 1' is ready for machining of a workpiece. The rotation of the cutting head 30 from the disengagement position to the engagement position, or in the opposite direction from the engagement position to the disengagement position, may for instance be performed by means of an implement (not shown) in the form of a key or the similar that is temporarily connected to the cutting head 30 through notches 40 or the similar in the cutting head.

In the embodiment illustrated in Figs 1-11, each one of the internal clamping surfaces 14 on the coupling legs 12 comprises:
- a cylindrical first sub surface 14a that extends in parallel with the centre axis C1 of the tool body 2, and
- a conical second sub surface 14b that is located axially rearward of said first sub surface 14a as seen in a reference direction D1 from the rear end 2b of the tool body 2 towards the front end 2a thereof in parallel with the centre axis C1 of the tool body and that adjoins to said first sub surface 14a along an upper edge 14c of the second sub surface 14b located essentially in a plane perpendicular to the centre axis C1 of the tool body 2.
Thus, the conical second sub surface 14b is located at a lower axial position on the coupling leg 12 than the adjacent cylindrical first sub surface 14a.

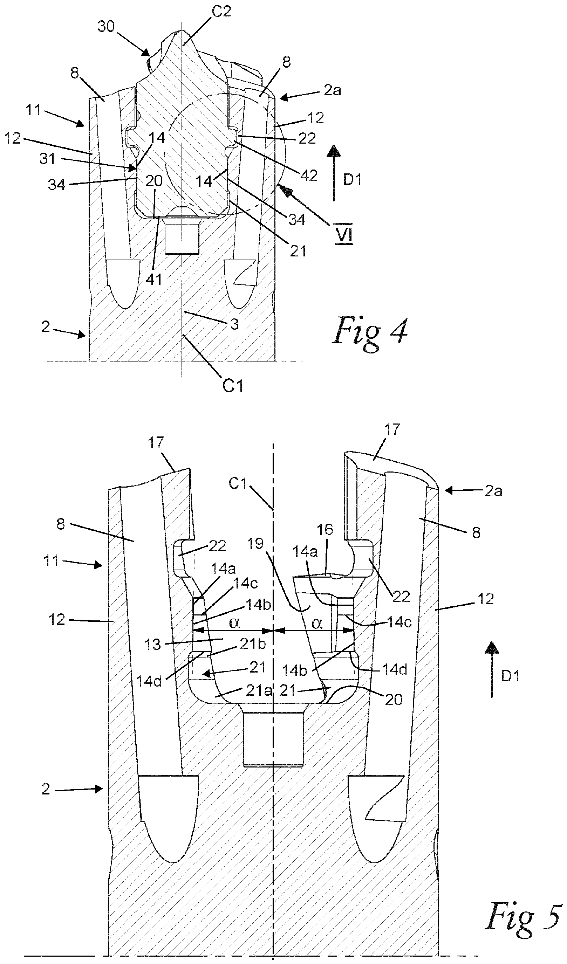

The conical second sub surface 14b is inclined outwards away from the centre axis C1 of the tool body 2 as seen in a direction along the second sub surface 14b from said upper edge 14c thereof towards an opposite lower edge 14d thereof, wherein the second sub surface 14b has such an inclination in relation to the centre axis C1 of the tool body 2 that the second sub surface 14b forms an angle α (see Fig 5) of 0.3-5°, preferably 0.3-2.5° and more preferably 0.5-1.0°, with the centre axis C1 of the tool body 2 as seen in any plane that extends across the second sub surface 14b and contains the centre axis C1 of the tool body 2. In the illustrated example, said angle α is 0.8°.

The cylindrical first sub surface 14a of each internal clamping surface 14 suitably has a length in the axial direction of the tool body 2 that corresponds to 5-50%, preferably 10-30%, of the total length of the internal clamping surface 14 in the axial direction of the tool body 2.

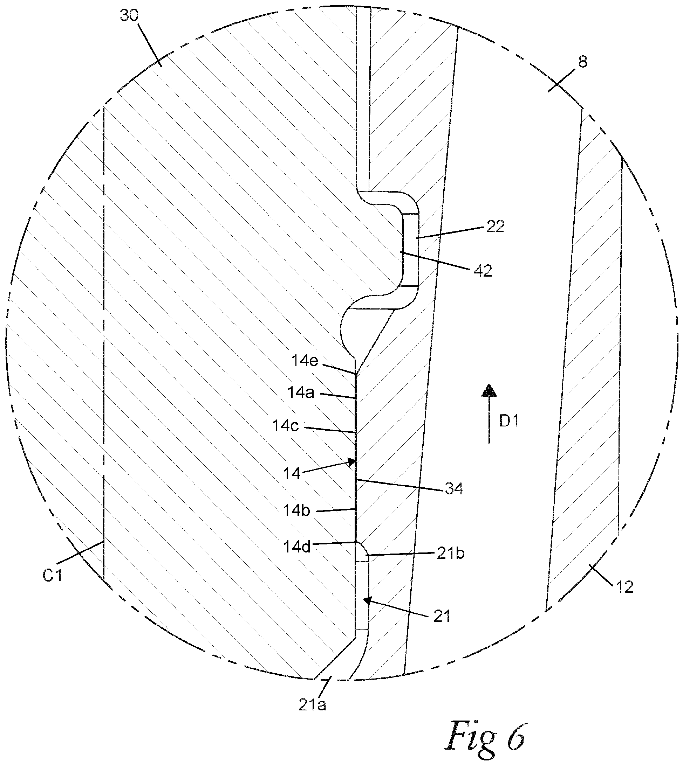

In order to provide the desired press-fit connection between the external clamping surfaces 34 on the cutting head 30 and the internal clamping surfaces 14 on the coupling legs 12 in the above-mentioned engagement position, each external clamping surface 34 on the cutting head 30 has a radius of curvature r₁ that is somewhat larger than the radius of curvature r₂ of the cylindrical first sub surface 14a of the associated internal clamping surface 14. When the tool body 2 is in a brand new condition, each one of the external clamping surfaces 34 on the coupling portion 31 of the cutting head 30 will initially, when the coupling portion 31 of the cutting head is rotated from the disengagement position to the engagement position and due to an ensuing small elastic deflection of the coupling legs 12 radially outwards away from the centre axis C1 of the tool body 2, make contact with the associated internal clamping surface 14 on one of the coupling legs along the intersection between the cylindrical first sub surface 14a and the conical second sub surface 14b, i.e. along the upper edge 14c of the conical second sub surface 14b. Thus, as illustrated in Fig 6, there will be a small clearance between the upper edge 14e of the cylindrical first sub surface 14a of each internal clamping surface 14 and the associated external clamping surface 34 and also a small clearance between the lower edge 14d of the conical second sub surface 14b of each internal clamping surface 14 and the associated external clamping surface 34. When the tool body 2 is in a brand new condition and a cutting head 30 for the first time is attached to the tool body 2 by rotation of the coupling portion 31 of the cutting head 30 into the engagement position, minor deformations will arise on each one of the internal clamping surfaces 14 at the interface with the associated external clamping surface 34 by embossing. The contact area between each internal clamping surface 14 and the associated external clamping surface 34 along the intersection between the cylindrical first sub surface 14a and the conical second sub surface 14b will be slightly increased by this embossing. During the machining of workpieces and in connection with each replacement of the cutting head 30 with a new cutting head 30, each internal clamping surface 14 will be subjected to further wear and embossing at the interface with the associated external clamping surface 34, which will cause a gradual and slow increase of said contact area in a direction upwards on the cylindrical first sub surface 14a and in an opposite direction downwards on the conical second sub surface 14b.

In the embodiment illustrated in Figs 1-11, the cylindrical first sub surfaces 14a of the internal clamping surfaces 14 have the same radius of curvature r₂ and are concentric with the centre axis C1 of the tool body 2. In the corresponding manner, the external clamping surfaces 34 have the same radius of curvature r₁ and are concentric with the centre axis C2 of the cutting head 30, wherein the radius of curvature r₁ of each external clamping surface 34 preferably is 1-4% larger than the radius of curvature r₂ of the cylindrical first sub surface 14a of each internal clamping surface. Thus, in this case, the cylindrical first sub surfaces 14a of the two internal clamping surfaces 14 form part of the curved surface of one and the same imaginary right circular cylinder with the radius r₂ and a centre axis coinciding with the centre axis C1 of the tool body 2, whereas the two external clamping surfaces 34 form part of the curved surface of one and the same imaginary right circular cylinder with the radius r₁ and a centre axis coinciding with the centre axis C2 of the cutting head 30. In the corresponding manner, the conical second sub surfaces 14b of the two internal clamping surfaces 14 form part of the conical surface of one and the same imaginary right circular cone with a centre axis coinciding with the centre axis C1 of the tool body 2.

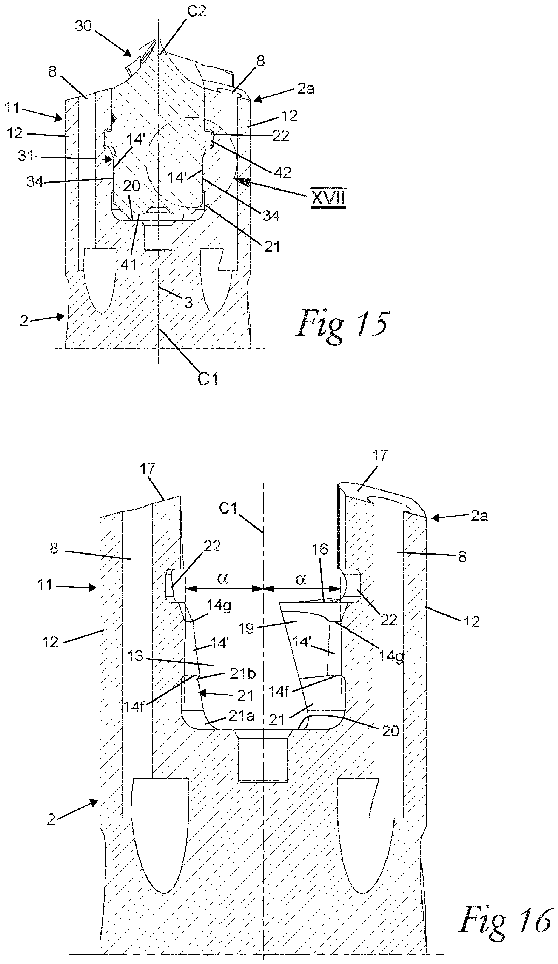

In the embodiment illustrated in Figs 12-20, each one of the internal clamping surfaces 14' on the coupling legs 12 has a lower edge 14f that faces the rear end 2b of the tool body 2 and an opposite upper edge 14g that faces away from the rear end 2b of the tool body 2 and that is located essentially in a plane perpendicular to the centre axis C1 of the tool body 2, wherein each internal clamping surface 14' is conical and inclined outwards away from the centre axis C1 of the tool body 2 as seen in a direction along the internal clamping surface 14' from the upper edge 14g thereof towards the lower edge 14f thereof and has such an inclination in relation to the centre axis C1 of the tool body 2 that the internal clamping surface 14' forms an angle α (see Fig 16) of 0.3-5°, preferably 0.3-2.5° and more preferably 0.5-1.0°, with the centre axis C1 of the tool body 2 as seen in any plane that extends across the internal clamping surface 14' and contains the centre axis C1 of the tool body 2. In the illustrated example, said angle α is 0.8°.

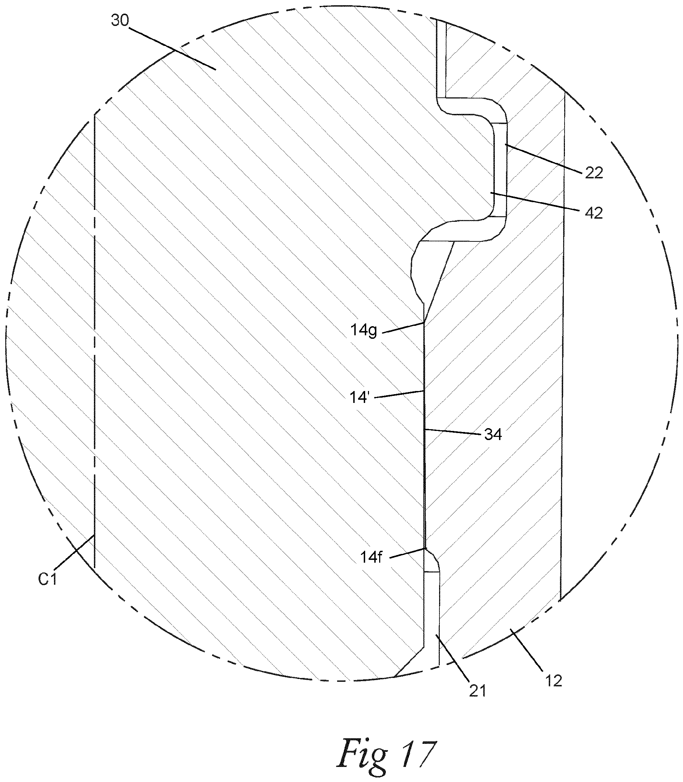

In order to provide the desired press-fit connection between the external clamping surfaces 34 on the cutting head 30 and the internal clamping surfaces 14' on the coupling legs 12 in the above-mentioned engagement position, each external clamping surface 34 on the cutting head 30 has a radius of curvature r₁ that is somewhat larger than the radius of curvature r₂ of the upper edge 14g of the associated internal clamping surface 14'. When the tool body 2 is in a brand new condition, each one of the external clamping surfaces 34 on the coupling portion 31 of the cutting head 30 will initially, when the coupling portion 31 of the cutting head is rotated from the disengagement position to the engagement position and due to an ensuing small elastic deflection of the coupling legs 12 radially outwards away from the centre axis C1 of the tool body 2, make contact with the associated internal clamping surface 14' on one of the coupling legs along the upper edge 14g thereof. Thus, as illustrated in Fig 17, there will be a small clearance between the lower edge 14f of each internal clamping surface 14' and the associated external clamping surface 34. When the tool body 2 is in a brand new condition and a cutting head 30 for the first time is attached to the tool body 2 by rotation of the coupling portion 31 of the cutting head 30 into the engagement position, minor deformations will arise on each one of the internal clamping surfaces 14' at the interface with the associated external clamping surface 34 by embossing. The contact area between each internal clamping surface 14' and the associated external clamping surface 34 along the upper edge 14g of the internal clamping surface 14' will be slightly increased by this embossing. During the machining of workpieces and in connection with each replacement of the cutting head 30 with a new cutting head 30, each internal clamping surface 14' will be subjected to further wear and embossing at the interface with the associated external clamping surface 34, which will cause a gradual and slow increase of said contact area in a direction downwards on the internal clamping surface 14'.

In the embodiment illustrated in Figs 12-20, the internal clamping surfaces 14' are concentric with the centre axis C1 of the tool body 2 and have the same radius of curvature r₂ at their upper edges 14g. In the corresponding manner, the external clamping surfaces 34 are concentric with the centre axis C2 of the cutting head 30 and have the same radius of curvature r₁, wherein the radius of curvature r₁ of each external clamping surface 34 preferably is 1-4% larger than the radius of curvature r₂ at the upper edge 14g of each internal clamping surface 14'. Thus, in this case, the two internal clamping surfaces 14' form part of the conical surface of one and the same imaginary right circular cone with a centre axis coinciding with the centre axis C1 of the tool body 2, whereas the two external clamping surfaces 34 form part of the curved surface of one and the same imaginary right circular cylinder with the radius r₁ and a centre axis coinciding with the centre axis C2 of the cutting head 30.

In order to facilitate the rotation of the cutting head 30 from the disengagement position to the engagement position, the coupling portion 31 of the cutting head 30 may be provided with two guide surfaces 39 arranged opposite to each other on opposite sides of the centre axis C2 of the cutting head, wherein these guide surfaces 39 adjoin to a respective one of the external clamping surfaces 34 on the coupling portion 31 of the cutting head and is arranged in front of the associated external clamping surface 34 as seen in the above-mentioned direction of rotation R1. In order to guide the external clamping surfaces 34 into engagement with the internal clamping surfaces 14 during the rotation of the coupling portion 31 of the cutting head 30 into the engagement position, a guide surface 19 is also provided on the inner side of each coupling leg 12 in front of the internal clamping surface 14 on the coupling leg as seen in the intended direction of rotation R of the cutting tool 1, 1'.

Two chip flutes 7 are formed in the peripheral surface 2c of the tool body 2 and extend, preferably helically, diametrically opposite each other and alongside of each other along a part of the tool body 2 from the collar 5 and up to the coupling portion 11 of the tool body. Each one of these chip flutes 7 extends up to an area between the two coupling legs 12 and is configured to connect to a corresponding chip flute 47 on the outside of the cutting head 30 when the coupling portion 31 of the cutting head is in the engagement position in the space 13 between the coupling legs 12. The chip flutes 7, 47 could alternatively be rectilinear instead of helical. The chip flutes 7, 47 are intended to carry away the chips generated by the cutting edges 37 during machining of a workpiece.

In the illustrated embodiments, a coolant channel 8 extends axially through each coupling leg 12 and opens into the upper end face 17 of the coupling leg.

The space 13 between the coupling legs 12 has a bottom surface 20 that is formed in the tool body 2 and that extends between the coupling legs 12. The distance in axial direction between the bottom surface 20 of the space 13 and each axial support surface 16 on the coupling legs 12 is suitably somewhat larger than the distance in axial direction between a bottom surface 41 of the cutting head 30 and each axial abutment surface 36 of the cutting head, so that there is a small clearance between these bottom surfaces 20, 41 when the axial abutment surfaces 36 of the cutting head abut against the axial support surfaces 16 on the coupling legs, as illustrated in Figs 4 and 15.

In the illustrated embodiments, an undercut groove 21 is formed in each coupling leg 12 on the inner side thereof between the internal clamping surface 14, 14' on the coupling leg and said bottom surface 20 between the coupling legs 12, wherein this undercut groove 21 extends in a concave curve between the two chip flutes 7. Thus, each one of these undercut grooves 21 is convex as seen in every cross-sectional plane through the coupling legs 12 that is perpendicular to the centre axis C1 of the tool body 2 and intersects the undercut groove 21. In the illustrated examples:
- each one of the undercut grooves 21 adjoins to the bottom surface 20 between the coupling legs 12 through a lower part 21a of the undercut groove that is concavely curved as seen in any plane that extends across the undercut groove 21 and contains the centre axis C1 of the tool body 2, and
- each one of the undercut grooves 21 adjoins to the internal clamping surface 14, 14' on the associated coupling leg 12 through an upper part 21b of the undercut groove 21 that is concavely curved as seen in any plane that extends across the undercut groove 21 and contains the centre axis C1 of the tool body 2.

Each coupling leg 12 is in a conventional manner provided with an axial locking member 22 that is configured to fit, preferably with play, with a corresponding axial locking member 42 on the coupling portion 31 of the cutting head 30 when the coupling portion 31 of the cutting head is in the engagement position in the space 13 between the coupling legs 12 to thereby form an axial lock between the cutting head 30 and the tool body 2 and prevent the coupling portion 31 of the cutting head 30 from moving out of the space 13 between the coupling legs in the axial direction of the tool body 2 when being in the engagement position in this space 13. The axial locking members 42 of the cutting head 30 are provided on the coupling portion 31 of the cutting head 30 opposite to each other on opposite sides of the centre axis C2 of the cutting head. In the illustrated embodiments, the axial locking member 22 of each coupling leg 12 is constituted by an elongated recess formed in the coupling leg on the inner side thereof, wherein the corresponding axial locking member 42 of the cutting head 30 is constituted by an external projection on the coupling portion 31 of the cutting head 30 that is configured to be received with play in said elongated recess. As an alternative, each axial locking member 42 of the cutting head 30 could be constituted by an elongated recess formed in the coupling portion 31 of the cutting head on the outer side thereof, wherein the corresponding axial locking member 22 of the tool body 2 is constituted by an internal projection on the inner side of a coupling leg 12 that is configured to be received with play in said elongated recess. In the illustrated embodiments, the axial locking member 22 of each coupling leg 12 is located at a position on the coupling leg 12 between the internal clamping surface 14, 14' on the coupling leg and the upper end face 17 of the coupling leg. As an alternative, the axial locking member 22 of each coupling leg 12 could be located at a position on the coupling leg 12 between the internal clamping surface 14, 14' on the coupling leg and the bottom surface 20 between the coupling legs 12. In the illustrated embodiments, the above-mentioned undercut groove 18 formed in each coupling leg 12 between the axial support surface 16 and the torque transfer surface 15 of the coupling leg adjoins to and is located on the coupling leg 12 in level with the elongated recess that forms the axial locking member 22 of the coupling leg 12.

The invention is of course not in any way restricted to the embodiments described above. On the contrary, many possibilities to modifications thereof will be apparent to a person with ordinary skill in the art without departing from the basic idea of the invention such as defined in the appended claims.

## Claims

1. A rotary cutting tool comprising an elongated tool body (2) and a replaceable cutting head (30) detachably attachable to the tool body (2), wherein:
- the tool body (2) has a rear end (2b) configured for attachment to a machine and an opposite front end (2a), wherein a longitudinal centre axis (C1) of the tool body (2) extends between the rear end (2b) and the front end (2a) of the tool body (2);
- the tool body (2) at its front end (2a) has a coupling portion (11) with two coupling legs (12) projecting in the axial direction of the tool body (2) and arranged opposite to each other on opposite sides of the centre axis (C1) of the tool body;
- the cutting head (30) has a coupling portion (31), which is designed for engagement with the coupling portion (11) of the tool body (2) and which is receivable in a space (13) between said coupling legs (12), wherein two convex and cylindrical external clamping surfaces (34) are provided on the coupling portion (31) of the cutting head (30) opposite to each other on opposite sides of a centre axis (C2) of the cutting head (30), the two external clamping surfaces (34) extending in parallel with the centre axis (C2) of the cutting head (30), wherein the external clamping surfaces (34) on the cutting head (30) are configured to be in press fit engagement with an internal clamping surface (14; 14') on an inner side of a respective one of the coupling legs (12) when the cutting head (30) is attached to the tool body (2);
- each coupling leg (12) is provided with a torque transfer surface (15) for transferring torque from the tool body (2) to the cutting head (30), which torque transfer surface (15) is configured to abut against a corresponding torque transfer surface (35) on the cutting head (30) when the cutting head is attached to the tool body (2); and
- the coupling portion (31) of the cutting head (30) is rotatable in said space (13) between the coupling legs (12) about the centre axis (C2) of the cutting head (30) between a disengagement position, in which the external clamping surfaces (34) on the coupling portion (31) of the cutting head (30) are disengaged from the internal clamping surfaces (14; 14') on the coupling legs (12) and the torque transfer surfaces (35) on the cutting head (30) are separated from the corresponding torque transfer surfaces (15) on the coupling legs (12), and an engagement position, in which the external clamping surfaces (34) on the coupling portion (31) of the cutting head (30) are in press fit engagement with the internal clamping surfaces (14; 14') on the coupling legs (12) and the torque transfer surfaces (35) on the cutting head (30) abut against the corresponding torque transfer surfaces (15) on the coupling legs (12),
**characterized in:**
- **that** each one of said internal clamping surfaces (14) on the coupling legs (12) comprises:
• a cylindrical first sub surface (14a) extending in parallel with the centre axis (C1) of the tool body (2), and
• a conical second sub surface (14b) that is located axially rearward of said first sub surface (14a) as seen in a reference direction (D1) from the rear end (2b) of the tool body (2) towards the front end (2a) thereof in parallel with the centre axis (C1) of the tool body and that adjoins to said first sub surface (14a) along an upper edge (14c) of the second sub surface (14b) located essentially in a plane perpendicular to the centre axis (C1) of the tool body (2), wherein the second sub surface (14b) is inclined outwards away from the centre axis (C1) of the tool body (2) as seen in a direction along the second sub surface (14b) from said upper edge (14c) thereof towards an opposite lower edge (14d) thereof and has such an inclination that the second sub surface (14b) forms an angle (α) of 0.3-5°, preferably 0.3-2.5° and more preferably 0.5-1.0°, with the centre axis (C1) of the tool body (2) as seen in any plane that extends across the second sub surface (14b) and contains the centre axis (C1) of the tool body (2); or
- **that** each one of said internal clamping surfaces (14') on the coupling legs (12) has an upper edge (14g) that faces away from the rear end (2b) of the tool body (2) and that is located essentially in a plane perpendicular to the centre axis (C1) of the tool body (2), wherein each one of said internal clamping surfaces (14') on the coupling legs (12) is conical and inclined outwards away from the centre axis (C1) of the tool body (2) as seen in a direction along the internal clamping surface (14') from the upper edge (14g) thereof towards an opposite lower edge (14f) thereof facing the rear end (2b) of the tool body (2) and has such an inclination that the internal clamping surface (14') forms an angle (α) of 0.3-5°, preferably 0.3-2.5° and more preferably 0.5-1.0°, with the centre axis (C1) of the tool body (2) as seen in any plane that extends across the internal clamping surface (14') and contains the centre axis (C1) of the tool body (2).

2. A rotary cutting tool according to claim 1, **characterized in:**
- **that** the cylindrical first sub surface (14a) of each one of said internal clamping surfaces (14) on the coupling legs (12) is concentric with the centre axis (C1) of the tool body (2); and
- **that** said external clamping surfaces (34) on the coupling portion (31) of the cutting head (30) are concentric with the centre axis (C2) of the cutting head (30), wherein each one of the external clamping surfaces (34) has a radius of curvature (r₁) that is larger, preferably 1-4% larger, than the radius of curvature (r₂) of the cylindrical first sub surface (14a) of each one of said internal clamping surfaces (14) on the coupling legs (12).

3. A rotary cutting tool according to claim 1 or 2, **characterized in that** the cylindrical first sub surface (14a) of each one of said internal clamping surfaces (14) on the coupling legs (12) has a length in the axial direction of the tool body (2) that corresponds to 5-50%, preferably 10-30%, of the total length of the internal clamping surface (14) in the axial direction of the tool body (2).

4. A rotary cutting tool according to claim 1, **characterized in:**
- **that** each one of said conical internal clamping surfaces (14') on the coupling legs (12) is concentric with the centre axis (C1) of the tool body (2); and
- **that** said external clamping surfaces (34) on the coupling portion (31) of the cutting head (30) are concentric with the centre axis (C2) of the cutting head (30), wherein each one of the external clamping surfaces (34) has a radius of curvature (r₁) that is larger, preferably 1-4% larger, than the radius of curvature (r₂) at the upper edge (14g) of each one of said conical internal clamping surfaces (14') on the coupling legs (12).

5. A rotary cutting tool according to any of claims 1-4, **characterized in that** two chip flutes (7) are formed in the tool body (2) on the outside thereof and extend, preferably helically, alongside of each other along a part of the tool body (2), wherein each one of these chip flutes (7) is configured to connect to a corresponding chip flute (47) on the outside of the cutting head (30) when the coupling portion (31) of the cutting head (30) is in said engagement position in said space (13) between the coupling legs (12).

6. A rotary cutting tool according to claim 5, **characterized in:**
- **that** said space (13) between the coupling legs (12) has a bottom surface (20) that is formed in the tool body (2) and that extends between the coupling legs (12); and
- **that** an undercut groove (21) is formed in each coupling leg (12) on the inner side thereof between the internal clamping surface (14; 14') on the coupling leg (12) and said bottom surface (20) and extends between the two chip flutes (7).

7. A rotary cutting tool according to claim 6, **characterized in that** each one of said undercut grooves (21) adjoins to said bottom surface (20) through a lower part (21a) of the undercut groove that is concavely curved as seen in any plane that extends across the undercut groove (21) and contains the centre axis (C1) of the tool body (2).

8. A rotary cutting tool according to claim 6 or 7, **characterized in that** each one of said undercut grooves (21) adjoins to the internal clamping surface (14; 14') on the associated coupling leg (12) through an upper part (21b) of the undercut groove that is concavely curved as seen in any plane that extends across the undercut groove (21) and contains the centre axis (C1) of the tool body (2).

9. A rotary cutting tool according to any of claims 1-8, **characterized in that** each one of the coupling legs (12) is provided with an axial locking member (22) that is configured to fit with a corresponding axial locking member (42) on the coupling portion (31) of the cutting head (30) when the coupling portion (31) of the cutting head is in said engagement position in said space (13) between the coupling legs (12) to thereby form an axial lock between the cutting head (30) and the tool body (2) and prevent the coupling portion (31) of the cutting head (30) from moving out of the space (13) between the coupling legs (12) in the axial direction of the tool body (2) when being in said engagement position in this space (13).

10. A rotary cutting tool according to claim 9, **characterized in that** the axial locking member (22) of each coupling leg (12) has the form of an elongated recess formed in the coupling leg (12) on the inner side thereof, wherein the corresponding axial locking member (42) of the cutting head (30) has the form of an external projection on the coupling portion (31) of the cutting head.

11. A rotary cutting tool according to claim 9 or 10, **characterized in that** the axial locking member (22) of each coupling leg (12) is located at a position on the coupling leg (12) between the internal clamping surface (14; 14') on the coupling leg (12) and an upper end face (17) of the coupling leg.

12. A rotary cutting tool according to any of claims 1-11, **characterized in that** each one of the coupling legs (12) is provided with an axial support surface (16) that is facing axially forward and configured to abut against a corresponding axial abutment surface (36) on the cutting head (30) when the cutting head it attached to the tool body (2).

13. A rotary cutting tool according to claim 12, **characterized in that** said axial support surface (16) on each coupling leg (12) is located at a higher axial position on the coupling leg (12) than the internal clamping surface (14; 14') on the coupling leg (12).

14. A rotary cutting tool according to claim 13, **characterized in that** the torque transfer surface (15) on each coupling leg (12) is located at a position on the coupling leg (12) between the axial support surface (16) on the coupling leg (12) and an upper end face (17) of the coupling leg.

15. A rotary cutting tool according to any of claims 1-14, **characterized in that** the internal clamping surface (14; 14') on each one of the coupling legs (12) adjoins to a guiding surface (19) that is provided on the associated coupling leg (12) in front of the internal clamping surface (14; 14') as seen in an intended direction of rotation (R) of the rotary cutting tool (1; 1') and that is configured to guide the corresponding external clamping surface (34) on the coupling portion (31) of the cutting head (30) into engagement with the internal clamping surface (14; 14') when the coupling portion (31) of the cutting head (30) is rotated in said space (13) between the coupling legs (12) about the centre axis (C2) of the cutting head (30) from said disengagement position to said engagement position.
